# EUROPÄISCHE PATENTSCHRIFT

(11) **EP 3 267 153 B1**
(45) Veröffentlichungstag und Bekanntmachung des Hinweises auf die Patenterteilung: **19.12.2018**
(21) Anmeldenummer: 17179471.2
(22) Anmeldetag: 04.07.2017
(51) Int. Cl.: G08G 1/16, G01C 21/20, B62D 15/02, G08G 1/14

(54) **VERFAHREN ZUR BESTIMMUNG EINER POSITION UND/ODER EINER ORIENTIERUNG EINES KRAFTFAHRZEUGS**
METHOD FOR DETERMINING A POSITION AND/OR THE ORIENTATION OF A MOTOR VEHICLE
PROCÉDÉ DE DÉTERMINATION D'UNE POSITION ET/OU D'UNE ORIENTATION D'UN VÉHICULE AUTOMOBILE

(30) Priorität: 07.07.2016 DE 102016212426
(43) Veröffentlichungstag der Anmeldung: 10.01.2018
(73) Patentinhaber: AUDI AG, 85045 Ingolstadt (DE)
(72) Erfinder: ALTINGER, Harald, 85049 Gerolfing (DE); SCHULLER, Florian, 85737 Ismaning (DE); FEIST, Christian, 85049 Ingolstadt (DE)

(56) Entgegenhaltungen:
- DE-A1-102014 003 937
- US-A1- 2010 066 515
- US-A1- 2010 211 267
- US-A1- 2014 074 352

## Beschreibung

Die Erfindung betrifft ein Verfahren zur Bestimmung einer Position und/oder eine Orientierung eines Kraftfahrzeugs. Daneben betrifft die Erfindung eine Infrastruktureinrichtung.

Um eine relative Position und/oder Orientierung eines Kraftfahrzeugs bezüglich bestimmter Objekte zu bestimmen, ist es bekannt, im Umfeld des Kraftfahrzeugs angebrachte Markierungen zu nutzen. Diese Markierungen können beispielsweise auf Schildern abgebildet sein oder, beispielsweise in Form eines Plakats oder direkt, auf Wände oder andere Umfeldobjekte aufgebracht sein. Entsprechende Markierungen können durch eine Kamera des Kraftfahrzeugs erfasst werden. Die geometrische Gestaltung der Markierung kann so gewählt werden, dass durch eine Bilddatenverarbeitung der durch die Kamera aufgenommenen Bilddaten eine Position und/oder eine Orientierung des Kraftfahrzeugs bezüglich der Markierung bestimmt werden kann. Zusätzlich können durch entsprechende Muster weitere Informationen an ein Kraftfahrzeug übermittelt werden, beispielsweise eine relative Lage einer Parkposition zu der Markierung oder ähnliches. Entsprechende zusätzliche Informationen können beispielsweise in Form eines Strich-, QR- oder AR-Codes codiert sein. Es können jedoch auch beliebige andere Muster erkannt und ausgewertet werden.

Nachteilig an der Nutzung entsprechender Markierungen ist, dass verschiedene Kraftfahrzeuge verschiedene Kameras und andere Erfassungseinrichtungen nutzen, um diese Markierungen zu erfassen, so dass nicht alle Markierungen durch alle Erfassungseinrichtungen optimal erkannt beziehungsweise ausgewertet werden können. Zudem kann nicht durch jedes Fahrzeug jede mögliche Markierung korrekt ausgewertet werden, sondern es werden eine Vielzahl verschiedener Markierungssysteme, teils parallel, genutzt. Soll eine entsprechende Markierung zur Positions- und/oder Orientierungsbestimmung, beispielsweise in einem Parkhaus, somit für eine Vielzahl verschiedener Fahrzeuge nutzbar sein, ist es erforderlich, eine Vielzahl von Erfassungs- und Verarbeitungsvarianten zu berücksichtigen. Dies erfordert beispielsweise die gleichzeitige Nutzung mehrerer verschiedener Markierungssysteme, wobei es jedoch möglich ist, dass Symbole eines dieser Markierungssysteme die Positions- beziehungsweise die Orientierungsbestimmung für ein anderes der Systeme stören.

Aus der Druckschrift US 2010/0 066 515 A1 ist ein Parkassistenzverfahren bekannt, bei dem eine Markierung mithilfe einer Kamera des Kraftfahrzeugs erfasst wird und mithilfe dieser erfassten Markierung eine Relativposition eines Parkplatzes zum Kraftfahrzeug berechnet wird. Die Markierung wird in einem Ausführungsbeispiel durch einen Laserscanner projiziert.

Ein Verfahren zur bidirektionalen Kommunikation zwischen einem Kraftfahrzeug und einer Infrastruktureinrichtung ist aus der Druckschrift DE 10 2014 003 937 A1 bekannt. Zur Übermittlung von ersten Daten von der Infrastruktureinrichtung an das Kraftfahrzeug wird ein optischer Informationsträger der Infrastruktureinrichtung durch einen bildgebenden Sensor des Kraftfahrzeugs ausgelesen. Zur Übertragung von Daten von dem Kraftfahrzeug an die Infrastruktureinrichtung wird eine von außen wahrnehmbare Aktion eines Aktors des Kraftfahrzeugs ausgeführt, die durch einen Umgebungssensor der Infrastruktureinrichtung erfasst und seitens der Infrastruktureinrichtung ausgewertet wird.

Die Druckschrift DE 10 2014 206 312 A1 offenbart ein Fahrzeug-zu-Infrastruktur-Kommunikationssystem zum bedarfsgerechten Einschalten einer Straßenbeleuchtung. Durch eine Sensoreinrichtung des Fahrzeugs werden Daten erfasst, welche die Bestimmung einer Position eines Fahrzeugs ermöglichen. Das Fahrzeug kann eine von diesen Daten abhängende Aktivierungsanfrage senden, um eine stationäre Beleuchtungseinheit zu aktivieren.

Um die Position eines Kraftfahrzeugs zu bestimmen schlägt die Druckschrift WO 2009/098319 A2 vor, Positionsmarker an festen Positionen entlang von Schnellstraßen zu nutzen. Die Positionsmarker können über eine kraftfahrzeugseitige Kamera erfasst werden. Dem Marker sind Daten zugeordnet, die die absolute Position des Markers bestimmen. Durch Auswertung der Bilddaten kann der Abstand von dem Marker zum Kraftfahrzeug bestimmt werden. Anhand der absoluten Position des Markers und des Abstands kann eine momentane Position des Kraftfahrzeugs abgeschätzt werden.

Der Erfindung liegt daher die Aufgabe zugrunde, ein Verfahren anzugeben, das eine demgegenüber verbesserte Positions- und/oder Orientierungsbestimmung bezüglich bestimmter markierter Objekte ermöglicht.

Die Aufgabe wird erfindungsgemäß durch ein Verfahren zur Bestimmung einer eine Position und/oder eine Orientierung eines Kraftfahrzeugs bezüglich einer ortsfesten Anzeigeeinrichtung beschreibenden Positionsinformation gelöst, das die folgenden Schritte umfasst:
- Senden einer Darstellungsinformation an eine die Anzeigeeinrichtung steuernde, fahrzeugexterne Steuereinrichtung durch eine Sendeeinrichtung des Kraftfahrzeugs
- Ermitteln einer Mustergrafik in Abhängigkeit der Darstellungsinformation und Ansteuern der Anzeigeeinrichtung zur Darstellung der Mustergrafik durch die Steuereinrichtung,
- Erfassen von zumindest einen Teil der Mustergrafik abbildenden Bilddaten durch wenigstens eine Erfassungseinrichtung des Kraftfahrzeugs, und
- Ermittlung der Positionsinformation in Abhängigkeit der Bilddaten durch eine Verarbeitungseinrichtung des Kraftfahrzeugs.

Erfindungsgemäß wird vorgeschlagen, statt statischen Markierungen bedarfsgerecht generierte Mustergrafiken zu nutzen, die durch eine oder mehrere ortsfeste Anzeigeeinrichtungen dargestellt werden können. Hierbei kann ausgenutzt werden, dass in einer Vielzahl von Bereichen, in denen eine entsprechende Positionsinformation ermittelt werden soll, beispielsweise in Parkhäusern, ohnehin mehrere Anzeigeeinrichtungen vorhanden sein können, um Informationen und/oder Werbung darzustellen. Werden diese Anzeigeeinrichtungen zur Darstellung der Mustergrafik genutzt, kann diese dynamisch an die Erfordernisse des Kraftfahrzeugs, für das die Positionsinformation bestimmt werden soll, angepasst werden. Hierzu wird erfindungsgemäß vorgeschlagen, dass das Kraftfahrzeug entsprechende Anforderungen in Form einer Darstellungsinformation an eine die Anzeigeeinrichtung steuernde Steuereinrichtung übertragen kann. Durch diese kann die darzustellende Mustergrafik anschließend angepasst werden, indem beispielsweise zwischen Farb- und Schwarzweißgrafiken gewählt wird, eine Skalierung der Mustergrafik stattfindet, Muster ausgewählt werden, die durch eine Verarbeitungseinrichtung des entsprechenden Fahrzeugs leicht erkennbar sind oder ähnliches.

Das erfindungsgemäße Verfahren kann besonders vorteilhaft im Rahmen eines Verfahrens zum automatisierten und/oder assistierten Einparken beziehungsweise Führen des Kraftfahrzeugs in beziehungsweise zu einem zu lokalisierenden Bereich, insbesondere einem Parkplatz genutzt werden. In Abhängigkeit der Positionsinformation kann durch eine Ausgabeeinrichtung des Kraftfahrzeugs ein Fahrhinweis an einen Fahrer ausgegeben werden und/oder ein Fahrzeugsystem kann zur Durchführung eines Fahreingriffs angesteuert werden und/oder eine automatisierte oder assistierte Führung kann angepasst werden, insbesondere indem eine Trajektorie des Kraftfahrzeugs in Abhängigkeit der Positionsinformation geplant oder angepasst wird.

Die Mustergrafik kann ermittelt werden, indem eine Farbgebung und/oder eine Helligkeit und/oder eine Größe der Darstellung eines vorgegebenen Musters in Abhängigkeit der Darstellungsinformation angepasst werden. Das Muster selbst kann unabhängig von der Darstellungsinformation oder abhängig von der Darstellungsinformation vorgegeben werden. Eine Anpassung der Farbgebung kann dadurch erfolgen, dass das Muster in Abhängigkeit der Darstellungsinformation wahlweise farbig oder schwarzweiß ausgegeben wird, eine andere Farbe für das Muster oder wenigstens einen Abschnitt des Musters gewählt wird, beispielsweise indem das gesamte Farbspektrum des Musters verschoben wird, Farbsättigungen angepasst werden oder ähnliches.

Die Darstellungsinformation kann die Form eines durch die Mustergrafik darzustellenden Musters beschreiben oder es können mehrere mögliche Formen für das darzustellende Muster vorgegeben werden, aus denen in Abhängigkeit der Darstellungsinformation eine darzustellende Form ausgewählt wird. Beispielsweise kann durch die Sendeeinrichtung eine Form, beispielsweise ein Logo, übertragen werden, die für das im Kraftfahrzeug genutzte Fahrerassistenzsystem spezifisch und durch dieses erkennbar ist. Die Sendeeinrichtung kann als Darstellungsinformation insbesondere eine Bilddatei übertragen, deren Inhalt als die Mustergrafik oder als Teil der Mustergrafik dargestellt wird. Alternativ kann die Darstellungsinformation auf eine, beispielsweise in Form einer Norm, vorgegebene Form bzw. Abbildung verweisen, die somit ausgewählt wird. Zusätzlich können Informationen bezüglich einer Größenskalierung des Musters übertragen werden, um beispielsweise eine auflösungsunabhängige Darstellung zu erreichen. Zur Bereitstellung der Mustergrafik kann die entsprechende Form skaliert und/oder verzerrt dargestellt werden, wobei ergänzend oder alternativ die Farbgebung und/oder die Helligkeit der Darstellung angepasst werden können.

Eine Auswahl einer Form für das darzustellende Muster kann beispielsweise in Fällen vorteilhaft sein, in denen mehrere Fahrerassistenzsysteme, die verschiedene Muster zur Positions- beziehungsweise Orientierungsbestimmung nutzen, in einem bestimmten Gebiet parallel genutzt werden. Sollen alle jene Systeme unterstützt werden, können mehrere Muster entsprechend in der Steuereinrichtung abgelegt oder durch diese abrufbar sein. Als Darstellungsinformation oder als Teil der Darstellungsinformation kann eine Information übertragen werden, die eine Identifizierung des Fahrerassistenzsystemtyps ermöglicht. In Abhängigkeit dieser Information kann eines der Muster beziehungsweise eine der Formen ausgewählt werden.

Die Darstellungsinformation kann wenigstens einen die Erfassungseinrichtung betreffenden Erfassungseinrichtungsparameter umfassen. Beispielsweise kann der Erfassungsparameter beschreiben, welche Art von Erfassungseinrichtung genutzt wird, also ob beispielsweise eine Infrarot-, Farb- oder Schwarzweiß-Kamera genutzt wird. Alternativ oder ergänzend können als Erfassungsparameter eine Auflösung der genutzten Erfassungseinrichtung, ein durch diese erfassbarer Raumwinkel oder eine minimale erfassbare Objektgröße übertragen werden. Ein erfassbarer Raumwinkel kann beispielsweise dafür relevant sein, in welchem Bereich einer Anzeigeeinrichtung ein entsprechendes Muster dargestellt wird. Der erfassbare Raumwinkel beziehungsweise die minimale Objektgröße können zudem ausgewertet werden, um die Größe der Darstellung des Musters zu bestimmen.

Durch eine Einrichtung des Kraftfahrzeugs oder eine fahrzeugexterne Einrichtung kann ein Abstand zwischen dem Kraftfahrzeug und der Anzeigeeinrichtung erfasst werden, wonach die Mustergrafik in Abhängigkeit des Abstandes skaliert wird. Hierdurch kann die Mustergrafik auch bei sehr großen oder sehr kleinen Abständen zuverlässig erfasst werden. Zudem kann ein entsprechend erfasster Abstand durch eine Darstellung in der Mustergrafik für einen Fahrer visualisiert werden und/oder ein durch eine fahrzeugexterne Einrichtung erfasster Abstand kann über die Mustergrafik und die Erfassung von dieser an das Kraftfahrzeug kommuniziert werden.

Die Mustergrafik kann durch die Steuereinrichtung zusätzlich in Abhängigkeit einer eine Zielposition für das Kraftfahrzeug bezüglich der Anzeigeeinrichtung betreffenden Zielinformation vorgegeben werden. Dies ist vorteilhaft, wenn das Fahrzeug zu dieser Zielposition, beispielsweise zu einem bestimmten Parkplatz, geführt werden soll. Die Zielposition kann kraftfahrzeugseitig vorgegeben werden, indem sie durch die Sendeeinrichtung an die fahrzeugexterne Steuereinrichtung übertragen wird. Es ist jedoch besonders vorteilhaft, wenn die Steuereinrichtung Teil einer Infrastruktureinrichtung ist, die Informationen über mögliche Zielpositionen, beispielsweise über freie Parkplätze, die durch das Fahrzeug nutzbar sind, bereitstellen kann. In diesem Fall kann beispielsweise durch eine Steuereinrichtung, die Teil eines Parkplatzverwaltungssystems eines Parkhauses ist, ermittelt werden, wo sich ein freier Parkplatz für das Kraftfahrzeug befindet. Dieser freie Parkplatz kann als Zielposition bestimmt werden und es kann an einer Anzeigeeinrichtung des Parkhauses beispielsweise eine Information angezeigt werden, die eine Fahrtroute zu der Zielposition betrifft.

Die Darstellung der Zielinformation kann separat von einem Grundmuster erfolgen, das eine Positions- und/oder eine Orientierungsbestimmung ermöglicht. Die Art der Darstellung kann von der Darstellungsinformation abhängen, so dass beispielsweise entsprechende Zielinformationen für unterschiedliche Fahrzeuge und somit unterschiedliche Fahrerassistenzsysteme angepasst bereitgestellt werden können. Soll ein Fahrzeug zu einer solchen Zielposition geführt werden, ist es vorteilhaft, wenn die Steuereinrichtung gleichzeitig oder mit einer der Route entsprechenden zeitlichen Abfolge mehrere Anzeigeeinrichtungen entlang der Route zur Zielposition steuert, um Mustergrafiken gemäß des erläuterten Verfahrens auszugeben.

Durch die Steuereinrichtung kann die oder wenigstens eine der Anzeigeeinrichtungen derart angesteuert werden, dass in einem ersten Betriebsmodus der Steuereinrichtung ein vorgegebenes Bild oder eine vorgegebene Bildfolge dargestellt wird und in einem zweiten Betriebsmodus die Mustergrafik dargestellt wird, wobei der Betriebsmodus der Steuereinrichtung in Abhängigkeit einer an die Steuereinrichtung bereitgestellten, die Position des Kraftfahrzeugs beschreibenden Lokalisierungsinformation und/oder in Abhängigkeit des Empfangs der Darstellungsinformation und/oder in Abhängigkeit einer seit dem Empfang der Darstellungsinformation verstrichenen Zeit erfolgt. Die Lokalisierungsinformation kann durch eine Positionsbestimmungseinrichtung des Kraftfahrzeugs, beispielsweise ein GPS-System, erfasst und über die Sendeeinrichtung des Kraftfahrzeugs an die Steuereinrichtung übertragen werden. Es ist jedoch auch möglich, dass die Lokalisierungsinformation durch eine oder mehrere ortsfeste Erfassungseinrichtungen, beispielsweise Kameras, erfasst wird. Beispielsweise kann das erfindungsgemäße Verfahren in einem Parkhaus durchgeführt werden, in dem die Positionen von das Parkhaus befahrenden Kraftfahrzeugen durch Kameras, Bewegungssensoren oder Ähnliches erfasst werden und diese Informationen können für die Steuereinrichtung bereitgestellt werden.

Der Wechsel des Betriebsmodus kann derart erfolgen, dass eine Darstellung der Mustergrafik nur in dem Zeitraum erfolgt, in dem sich das Kraftfahrzeug innerhalb eines vorgegebenen Bereichs um die Anzeigeeinrichtung befindet beziehungsweise in dem es so positioniert und ausgerichtet ist, dass wenigstens eine Erfassungseinrichtung des Kraftfahrzeugs die Mustergrafik an der Anzeigeeinrichtung erfassen kann. Insbesondere wenn keine Lokalisierungsinformation für das Kraftfahrzeug vorliegt, kann die Darstellung der Mustergrafik nach Empfang der Darstellungsinformation unmittelbar oder nach einem vorgegebenen Zeitintervall erfolgen und/oder für ein vorgegebenes Zeitintervall andauern. Die vorgegebenen Bilder beziehungsweise Bildfolgen können Werbung, Informationen, beispielsweise Informationen über eine Parkplatzbelegung, Sicherheitshinweise, Parkplatznummern oder ähnliches darstellen. Die Bilder beziehungsweise Bildfolgen können auf einem Massenspeicher der Steuereinrichtung oder der Anzeigeeinrichtung gespeichert sein, durch die Steuereinrichtung oder die Anzeigeeinrichtung dynamisch generiert werden oder von einer externen Einrichtung bereitgestellt werden.

Neben dem erfindungsgemäßen Verfahren betrifft die Erfindung eine Infrastruktureinrichtung, umfassend eine durch ein Kraftfahrzeug befahrbare Fahrfläche, eine Steuereinrichtung und wenigstens eine durch die Steuereinrichtung steuerbare, ortsfeste Anzeigeeinrichtung, wobei die Steuereinrichtung dazu eingerichtet ist gemäß des erfindungsgemäßen Verfahrens die von dem Kraftfahrzeug gesendete Darstellungsinformation zu empfangen, die Mustergrafik in Abhängigkeit der Darstellungsinformation zu ermitteln und die Anzeigeeinrichtung zur Darstellung der Mustergrafik anzusteuern. Bei der Infrastruktureinrichtung kann es sich um einen Parkplatz oder ein Parkhaus handeln. Die erfindungsgemäße Infrastruktureinrichtung lässt sich mit Merkmalen, die zum erfindungsgemäßen Verfahren erläutert wurden, mit den dort genannten Vorteilen weiterbilden.

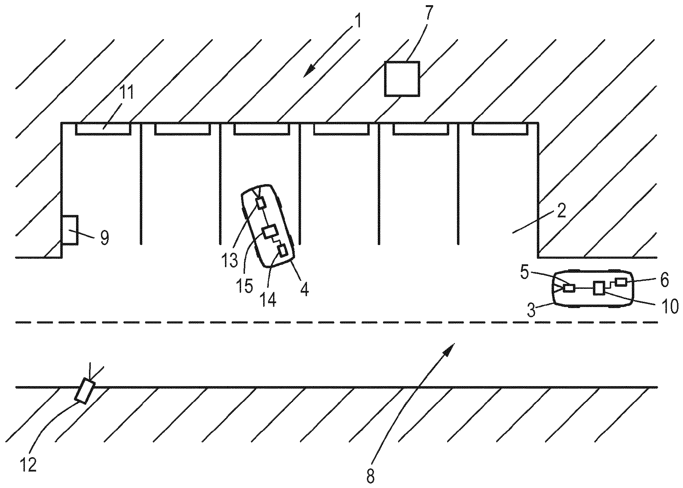

Weitere Vorteile und Einzelheiten der Erfindung ergeben sich aus dem im Folgenden erläuterten Ausführungsbeispiel sowie der Figur, die eine Verkehrssituation zeigt, in der ein Ausführungsbeispiel des erfindungsgemäßen Verfahrens in einem Ausführungsbeispiel einer erfindungsgemäßen Infrastruktureinrichtung genutzt wird.

Die Infrastruktureinrichtung 1 ist ein Parkhaus mit einer Fahrfläche 8, die eine Vielzahl von Parkplätzen 2 umfasst. Die Fahrzeuge 3, 4 sollen jeweils zu einem der Parkplätze 2 geführt werden. Dies kann ermöglicht werden, indem die Führung zu den Parkplätzen 2 durch ein Fahrerassistenzsystem assistiert oder automatisiert erfolgt oder dadurch, dass durch das Fahrerassistenzsystem die Fahrzeugführung betreffende Hinweise an einen jeweiligen Fahrer ausgegeben werden. Hierzu ist es jedoch notwendig, die aktuelle Position und/oder Orientierung der Kraftfahrzeuge 3, 4 bezüglich der Infrastruktureinrichtung 1 beziehungsweise bezüglich der Parkplätze 2 zu ermitteln. Dies wird im folgenden Beispiel zunächst für das Kraftfahrzeug 3 erläutert.

Das Kraftfahrzeug 3 weist eine Erfassungseinrichtung 5, nämlich eine Kamera, auf, durch die das vordere Umfeld des Kraftfahrzeugs 3 erfassbar ist. Durch diese wird unter anderem eine Anzeigefläche der Anzeigeeinrichtung 9 erfasst. Wird nun durch die Anzeigeeinrichtung 9 ein bestimmtes geometrisches Muster dargestellt, können die durch die Kamera 5 erfassten Bilddaten durch eine Verarbeitungseinrichtung 10 des Kraftfahrzeugs 3 ausgewertet werden, um dieses Muster in den Bilddaten zu erkennen. Handelt es sich um ein bekanntes Muster, kann, beispielsweise aufgrund der Größe des Musters, ein Abstand zwischen dem Kraftfahrzeug 3 und der Anzeigeeinrichtung 9 ermittelt werden. Aus der Position, an der das Muster in den Bilddaten erkannt wird, kann eine seitliche Verschiebung des Kraftfahrzeugs 3 und aus einer Verzerrung des Musters kann eine relative Orientierung des Kraftfahrzeugs 3 zu der Anzeigeeinrichtung 9 ermittelt werden. Ein entsprechendes Vorgehen ist im Stand der Technik für zeitlich unveränderliche Muster, die beispielsweise auf einem Plakat oder einem Schild an einer Wand angebracht sind, bekannt und soll daher nicht detailliert erläutert werden.

Für eine derartige Positions- und Orientierungserfassung ist es wesentlich, dass die Mustergrafik einerseits durch die Erfassungseinrichtung 5 des Kraftfahrzeugs 3 mit hoher Qualität und ausreichender Auflösung erfasst wird und andererseits ein durch diese Mustergrafik dargestelltes Muster durch die Verarbeitungseinrichtung 10 erkennbar ist, so dass aus der Abbildung des Musters wie erläutert eine Position und Orientierung des Kraftfahrzeugs 3 bestimmt werden kann. Dies wird wie folgt erreicht:
In der Verarbeitungseinrichtung 10 sind einerseits die Erfassungseinrichtung 5 betreffende Erfassungsparameter, also beispielsweise ob es sich um eine Farb-, eine Schwarzweiß- oder eine Infrarot-Kamera handelt, eine Auflösung der Kamera und ein durch die Kamera erfassbarer Raumwinkel, sowie ein den Typ der Verarbeitungseinrichtung 10 beschreibender Typenparameter gespeichert. Die Erfassungseinrichtungsparameter und der Typenparameter werden über die kraftfahrzeugseitige Sendeeinrichtung 6 an die fahrzeugexterne Steuereinrichtung 7 übertragen, die die an den Wänden angeordneten Anzeigeeinrichtungen 9, 11 steuert. In der Steuereinrichtung 7 sind mehrere mögliche Formen für das darzustellende Muster gespeichert. In Abhängigkeit des Typenparameters wird eine dieser Formen ausgewählt, die gemäß des übertragenen Typenparameters durch die Verarbeitungseinrichtung 10 nutzbar ist, um bei einer Erkennung des entsprechenden Musters in den Bilddaten eine Position und Orientierung des Kraftfahrzeugs 3 zu bestimmen. Durch das Vorhalten mehrerer verschiedener Formen können unterschiedliche Fahrerassistenzsystemtypen, beispielsweise Fahrerassistenzsysteme von verschiedenen Herstellern, unterstützt werden. Anschließend wird durch die Steuereinrichtung 7 eine Mustergrafik ermittelt, die ein Muster mit der ausgewählten Form umfasst.

Die Farbgebung, die Helligkeit und die Größe der Darstellung des Musters sowie die Position, an der das Muster in der Mustergrafik dargestellt wird, werden in Abhängigkeit der als Teil der Darstellungsinformation übertragene Erfassungseinrichtungsparameter und des Typenparameters angepasst. Beispielsweise kann bei einer Nutzung einer Schwarzweißkamera als Erfassungseinrichtung 5 das Muster mit maximalem Kontrast dargestellt werden. Bei einer Nutzung einer Infrarot-Kamera können zur Musterdarstellung insbesondere Variationen des Rotanteils genutzt werden, da dieser durch eine solche Kamera am besten erfasst wird. Bei einer Nutzung einer Farbkamera können neben Kontrastwechseln auch Farbwechsel zur Darstellung des Musters genutzt werden. Soll ausschließlich eine Orientierungsposition bestimmt werden oder werden durch die Erfassungseinrichtung 5 mehrere voneinander beabstandete Mustergrafiken erfasst, kann auch die Größe der Darstellung des Musters beziehungsweise der Mustergrafik in Abhängigkeit der Darstellungsinformation angepasst werden, um eine zuverlässige Erkennung des Musters auch bei einer geringen Auflösung der Kamera und/oder bei einem großen Abstand zwischen der Anzeigeeinrichtung 9 und dem Kraftfahrzeug 3 zu ermöglichen.

In einer vorteilhaften Variante des Ausführungsbeispiels kann die Mustergrafik in Abhängigkeit eines Abstands zwischen dem Kraftfahrzeug 3 und der Anzeigeeinrichtung 9 angepasst werden. Der Abstand zwischen dem Kraftfahrzeug 3 und der Anzeigeeinrichtung 9 kann beispielsweise dadurch ermittelt werden, dass das Kraftfahrzeug 3 durch eine ortsfeste Erfassungseinrichtung 12, beispielsweise eine Kamera oder ein Radarsensor, erfasst wird und seine Position bestimmt wird. Hierbei kann die Mustergrafik beziehungsweise das Muster in der Mustergrafik in Abhängigkeit des Abstandes skaliert werden. Zudem kann die Mustergrafik ein zusätzliches Informationselement umfassen, das den Abstand oder eine daraus abgeleitete Information darstellt. Die Darstellung kann für einen Fahrer des Kraftfahrzeugs 3 entzifferbar sein oder sie kann, beispielsweise in Form eines Strichcodes, AR-Codes oder QR-Codes kodiert sein und nach einer Erfassung der Mustergrafik durch die Erfassungseinrichtung 5 durch das Fahrerassistenzsystem 10 auswertbar sein. Eine Art der Kodierung kann von der Darstellungsinformation, insbesondere von dem Erfassungseinrichtungsparameter oder von dem Typenparameter abhängen und somit an eine konkrete Ausbildung des Kraftfahrzeugs 3 angepasst werden.

Die Steuereinrichtung 7 der Infrastruktureinrichtung 1 ist dazu eingerichtet, das Kraftfahrzeug 3 gemeinsam mit der als Fahrerassistenzsystem ausgebildeten Verarbeitungseinrichtung 10 zu einer Zielposition, nämlich einem bestimmten Parkplatz 2, zu führen. Das Fahrerassistenzsystem 10 kann hierzu Fahreingriffe ausführen, das Fahrzeug assistiert oder automatisiert führen und/oder Fahranweisungen an einen Fahrer geben. Entsprechende Führungsstrategien zu vorgegebenen Positionen bezüglich des Kraftfahrzeugs sind im Stand der Technik bekannt und sollen nicht detailliert erläutert werden. Eine Möglichkeit dies zu erreichen ist es, als Teil der Mustergrafik zusätzlich eine Zielinformation darzustellen. Diese kann insbesondere so dargestellt werden, beispielsweise durch die vorangehend erläuterten Codierungen, dass nach Erfassung der Mustergrafik durch die Erfassungseinrichtung 5 die Zielinformation durch das Fahrerassistenzsystem 10 ausgelesen werden kann. Die Art der Darstellung der Zielinformation kann ebenfalls in Abhängigkeit der Darstellungsinformation angepasst werden.

Auch das Kraftfahrzeug 4 soll auf eine der Parkplätze 2 geführt werden, und zwar in jenen Parkplatz 2, in den es bereits hineinragt. Häufig ist jedoch eine exakte Positionierung des Kraftfahrzeugs 4 in dem Parkplatz 2 gewünscht, beispielsweise um einen erhöhten Platzverbrauch des Kraftfahrzeugs 4 zu vermeiden oder um das Kraftfahrzeug 4 in eine definierte Position zu führen, in der beispielsweise das Laden einer Batterie des Kraftfahrzeugs 4 durch eine ortsfeste Ladeeinrichtung ermöglicht wird. Hierzu weist das Kraftfahrzeug 4 ebenfalls eine Erfassungseinrichtung 13, eine Sendeeinrichtung 14 und eine Verarbeitungseinrichtung 15 auf. Zur Führung des Kraftfahrzeugs 4 können die im Bereich der Parkplätze 2 liegenden Anzeigeeinrichtungen 11 oder Teile dieser Anzeigeeinrichtungen genutzt werden. Hierbei wird vorgegangen, wie zu Kraftfahrzeug 3 erläutert, wobei aufgrund der Tatsache, dass über die Sendeeinrichtung 14 des Kraftfahrzeugs 4 Darstellungsinformationen übertragen werden, die den Typ der Verarbeitungseinrichtung 15 und Erfassungsparameter der Erfassungseinrichtung 13 betreffen, die Darstellung der Mustergrafik auf den Anzeigeeinrichtungen 11 an die Erfordernisse des Kraftfahrzeugs 4 angepasst werden kann. Die Anzeigeeinrichtung 9 und die Anzeigeeinrichtung 11 können somit beispielsweise Muster mit unterschiedlichen Formen darstellen und/oder die Farbgebung und/oder die Helligkeit und/oder die Größe der Darstellung der jeweiligen Muster kann unterschiedlich sein. Hierdurch wird eine optimale Anpassung der jeweiligen Musterdarstellung an die einzelnen Kraftfahrzeuge 3, 4 erreicht.

Vorangehend wurde davon ausgegangen, dass die jeweiligen Formen der darzustellenden Muster alle in der Steuereinrichtung 7 bereitstehen, wobei in Abhängigkeit der Darstellungsinformation eine Auswahl aus diesen Formen erfolgt. In einer Weiterbildung des gezeigten Beispiels wäre es auch möglich, dass durch das Kraftfahrzeug 3 und/oder das Kraftfahrzeug 4 über die jeweilige Sendeeinrichtung 6, 14 eine Darstellungsinformation an die Steuereinrichtung 7 übertragen wird, die die Form eines durch die Mustergrafik dargestellten Musters beschreibt. Dies ist beispielsweise möglich, wenn eines der Fahrerassistenzsysteme 10, 15 eine Form eines Musters zur Bestimmung einer Orientierung und/oder Position erwartet, die in der Steuereinrichtung 7 nicht vorliegt. Dies kann beispielsweise durch eine bidirektionale Kommunikation zwischen der Sendeeinrichtung 6, 14 und der Steuereinrichtung 7 ermittelt werden. Alternativ wäre es auch möglich, dass stets die Form eines Musters und/oder weitere Informationen, beispielsweise dessen Farbgebung, als Teil der Darstellungsinformation übertragen werden.

Die Anzeigeeinrichtungen 9, 11 werden vorteilhaft nicht ausschließlich zur Darstellung von Mustergrafiken genutzt, sondern auch, um vorgegebene Bilder oder Bildfolgen darzustellen, beispielsweise um Informationen zur Verfügung zu stellen, Werbenachrichten zu zeigen oder ähnliches. Um dies zu ermöglichen, kann die Steuereinrichtung 7 insgesamt oder für jede der Anzeigeeinrichtungen 9, 11 verschiedene Betriebsmodi aufweisen, wobei in einem der Betriebsmodi die Mustergrafik dargestellt wird und in dem anderen das vorgegebene Bild oder die vorgegebene Bildfolge. Eine Umschaltung zur Darstellung der Mustergrafik kann beispielsweise dann erfolgen, wenn über die Erfassungseinrichtung 12 ein Aufenthalt eines Kraftfahrzeugs 3, 4 in einem relevanten Bereich festgestellt wird, oder dann, wenn eine Darstellungsinformation von einem Kraftfahrzeug 3, 4 empfangen wurde. Wurde für eine vorbestimmte Zeit keine Darstellungsinformation empfangen oder wird erfasst, dass sich keine Kraftfahrzeuge 3, 4 in dem relevanten Bereich befinden und/oder wird erfasst, dass alle der Kraftfahrzeuge 3, 4 abgestellt sind, so kann zurück in jenen Betriebsmodus gewechselt werden, in dem das Bild beziehungsweise die Bildfolge dargestellt wird.

## Patentansprüche

1. Verfahren zur Bestimmung einer eine Position und/oder eine Orientierung eines Kraftfahrzeugs (3, 4) bezüglich wenigstens einer ortsfesten Anzeigeeinrichtung (9, 11) beschreibenden Positionsinformation, umfassend die Schritte:
- Senden einer Darstellungsinformation an eine die Anzeigeeinrichtung (9, 11) steuernde, fahrzeugexterne Steuereinrichtung (7) durch eine Sendeeinrichtung (6, 14) des Kraftfahrzeugs (3, 4),
- Ermitteln einer Mustergrafik in Abhängigkeit der Darstellungsinformation und Ansteuern der Anzeigeeinrichtung (9, 11) zur Darstellung der Mustergrafik durch die Steuereinrichtung (7),
- Erfassen von zumindest einen Teil der Mustergrafik abbildenden Bilddaten durch wenigstens eine Erfassungseinrichtung (5, 13) des Kraftfahrzeugs (3, 4), und
- Ermittlung der Positionsinformation in Abhängigkeit der Bilddaten durch eine Verarbeitungseinrichtung (10, 15) des Kraftfahrzeugs (3, 4).

2. Verfahren nach Anspruch 1,
**dadurch gekennzeichnet,**
**dass** die Mustergrafik ermittelt wird, indem eine Farbgebung und/oder eine Helligkeit und/oder eine Größe der Darstellung eines vorgegebenen Musters in Abhängigkeit der Darstellungsinformation angepasst werden.

3. Verfahren nach Anspruch 1 oder 2,
**dadurch gekennzeichnet,**
**dass** die Darstellungsinformation die Form eines durch die Mustergrafik darzustellenden Musters beschreibt oder dass mehrere mögliche Formen für das darzustellende Mustern vorgegeben werden, aus denen in Abhängigkeit der Darstellungsinformation eine darzustellende Form ausgewählt wird.

4. Verfahren nach einem der vorangehenden Ansprüche,
**dadurch gekennzeichnet,**
**dass** die Darstellungsinformation wenigstens einen die Erfassungseinrichtung (5, 13) betreffenden Erfassungseinrichtungsparameter umfasst.

5. Verfahren nach einem der vorangehenden Ansprüche,
**dadurch gekennzeichnet,**
**dass** durch eine Einrichtung des Kraftfahrzeugs oder eine fahrzeugexterne Einrichtung (12) ein Abstand zwischen dem Kraftfahrzeug (3, 4) und der Anzeigeeinrichtung (9, 11) erfasst wird, wonach die Mustergrafik in Abhängigkeit des Abstandes skaliert wird.

6. Verfahren nach einem der vorangehenden Ansprüche,
**dadurch gekennzeichnet,**
**dass** die Mustergrafik durch die Steuereinrichtung (7) zusätzlich in Abhängigkeit einer eine Zielposition für das Kraftfahrzeug (3, 4) betreffenden Zielinformation vorgegeben wird.

7. Verfahren nach einem der vorangehenden Ansprüche,
**dadurch gekennzeichnet,**
**dass** durch die Steuereinrichtung (7) die oder wenigstens eine der Anzeigeeinrichtungen (9, 11) derart angesteuert wird, dass in einem ersten Betriebsmodus der Steuereinrichtung (7) ein vorgegebenes Bild oder eine vorgegebene Bildfolge dargestellt wird und in einem zweiten Betriebsmodus die Mustergrafik dargestellt wird, wobei der Betriebsmodus der Steuereinrichtung (7) in Abhängigkeit einer an die Steuereinrichtung (7) bereitgestellten, die Position des Kraftfahrzeugs (3, 4) beschreibenden Lokalisierungsinformation und/oder in Abhängigkeit des Empfangs der Darstellungsinformation und/oder in Abhängigkeit einer seit dem Empfang der Darstellungsinformation verstrichenen Zeit erfolgt.

8. Infrastruktureinrichtung, umfassend eine durch ein Kraftfahrzeug (3, 4) befahrbare Fahrfläche (8), eine Steuereinrichtung (7) und wenigstens eine durch die Steuereinrichtung (7) steuerbare, ortsfeste Anzeigeeinrichtung (9, 11),
**dadurch gekennzeichnet,**
**dass** die Steuereinrichtung (7) dazu eingerichtet ist, gemäß dem Verfahren nach einem der vorangehenden Ansprüche die von dem Kraftfahrzeug (3, 4) gesendete Darstellungsinformation zu empfangen, die Mustergrafik in Abhängigkeit der Darstellungsinformation zu ermitteln und die Anzeigeeinrichtung (9, 11) zur Darstellung der Mustergrafik anzusteuern.

## Claims

1. Method for determining position information describing a position and/or an orientation of a motor vehicle (3, 4) with respect at least to one stationary display device (9, 11), comprising the steps:
- Transmitting display information to a vehicle-external control device (7) controlling the display device (9, 11) by means of a transmission device (6, 14) of the motor vehicle (3, 4),
- Determining a pattern graphic in dependence on the display information and controlling the display device (9, 11) for display of the pattern graphic by the control device (7),
- Detecting the image data imaging at least a part of the pattern graphic by means of at least one detection device (5, 13) of the motor vehicle (3, 4), and
- Identification of the position information in dependence on the image data by means of a processing device (10, 15) of the motor vehicle (3, 4).

2. Method according to claim 1,
**characterised in that**
the pattern graphic is determined, **in that** a colouring and/or a brightness and/or a size of the display of the predetermined pattern is adjusted in dependence on the display information.

3. Method according to claim 1 or 2,
**characterised in that**
the display information describes the form of a pattern to be displayed by the pattern graphic or that several possible forms are predetermined for the pattern to be displayed, from which in dependence on the display information a form to be displayed is selected.

4. Method according to any one of the preceding claims,
**characterised in that**
the display information comprises at least one detection device parameter related to the detection device (5, 13).

5. Method according to any one of the preceding claims,
**characterised in that**
a distance between the motor vehicle (3, 4) and the display device (9, 11) is detected by a device of the motor vehicle or a vehicle-external device (12), whereby the pattern graphic is scaled in dependence on the distance.

6. Method according to any one of the preceding claims,
**characterised in that**
the pattern graphic is additionally predetermined by the control device (7) in dependence on target information related to a target position for the motor vehicle (3, 4).

7. Method according to any one of the preceding claims,
**characterised in that**
the or at least one of the display devices (9, 11) is controlled by the control device (7) in such a manner that in a first operating mode of the control device (7) a predetermined image or a predetermined sequence of images is displayed and in a second operating mode the pattern graphic is displayed, wherein the operating mode of the control device (7) takes place in dependence on localisation information provided to the control device (7), which describes the position of the motor vehicle (3, 4) and/or in dependence on the receipt of the display information and/or in dependence on a time elapsed since the receipt of the display information.

8. Infrastructure device, comprising a driving surface (8) drivable by a motor vehicle (3, 4), a control device (7) and at least one stationary display device (9, 11) controllable by the control device (7),
**characterised in that**
the control device (7) is set up in accordance with the method according to any one of the preceding claims to receive the display information transmitted by the motor vehicle (3, 4), to determine the pattern graphic in dependence on the display information and to control the display device (9, 11) for the display of the pattern graphic.

## Revendications

1. Procédé servant à définir une information de position décrivant une position et/ou une orientation d'un véhicule automobile (3, 4) par rapport à au moins un dispositif d'affichage (9, 11) stationnaire, comprenant les étapes :
- d'envoi d'une information de représentation à un dispositif de commande (7) externe au véhicule, commandant le dispositif d'affichage (9, 11), par un dispositif d'envoi (6, 14) du véhicule automobile (3, 4),
- de détermination d'un graphique de motif en fonction de l'information de représentation et de pilotage du dispositif d'affichage (9, 11) pour représenter le graphique de motif par le dispositif de commande (7),
- de détection de données d'image reproduisant au moins une partie du graphique de motif par au moins un dispositif de détection (5, 13) du véhicule automobile (3, 4), et
- de détermination de l'information de position en fonction des données d'image par un dispositif de traitement (10, 15) du véhicule automobile (3, 4).

2. Procédé selon la revendication 1,
**caractérisé en ce**
**que** le graphique de motif est déterminé **en ce qu'**un coloris et/ou une luminosité et/ou une grandeur de la représentation d'un motif prédéfini sont adaptés en fonction de l'information de représentation.

3. Procédé selon la revendication 1 ou 2,
**caractérisé en ce**
**que** l'information de représentation décrit la forme d'un motif à représenter par le graphique de motif, ou que plusieurs formes possibles sont prédéfinies pour le motif à représenter, parmi lesquelles une forme à représenter est sélectionnée en fonction de l'information de représentation.

4. Procédé selon l'une quelconque des revendications précédentes,
**caractérisé en ce**
**que** l'information de représentation comprend au moins un paramètre de dispositif de détection concernant le dispositif de détection (5, 13).

5. Procédé selon l'une quelconque des revendications précédentes,
**caractérisé en ce**
**qu'**est détectée par un dispositif du véhicule automobile ou un dispositif (12) externe au véhicule, une distance entre le véhicule automobile (3, 4) et le dispositif d'affichage (9, 11), selon laquelle le graphique de motif est mis à l'échelle.

6. Procédé selon l'une quelconque des revendications précédentes,
**caractérisé en ce**
**que** le graphique de motif est prédéfini par le dispositif de commande (7) en supplément en fonction d'une information de destination concernant une position de destination pour le véhicule automobile (3, 4).

7. Procédé selon l'une quelconque des revendications précédentes,
**caractérisé en ce**
**que** le ou au moins un des dispositifs d'affichage (9, 11) est piloté par le dispositif de commande (7) de telle manière qu'une image prédéfinie ou une séquence d'images prédéfinie est représentée dans un premier mode de fonctionnement du dispositif de commande (7) et le graphique de motif est représenté dans un deuxième mode de fonctionnement, dans lequel le mode de fonctionnement du dispositif de commande (7) a lieu en fonction d'une information de localisation fournie au dispositif de commande (7), décrivant la position du véhicule automobile (3, 4) et/ou en fonction de la réception de l'information de représentation et/ou en fonction d'une durée écoulée depuis la réception de l'information de représentation.

8. Dispositif d'infrastructure comprenant une surface de déplacement (8) pouvant être empruntée par un véhicule automobile (3, 4), un dispositif de commande (7) et au moins un dispositif d'affichage (9, 11) stationnaire pouvant être commandé par le dispositif de commande (7),
**caractérisé en ce**
**que** le dispositif de commande (7) est mis au point pour recevoir, selon le procédé selon l'une quelconque des revendications précédentes, l'information de représentation envoyée par le véhicule automobile (3, 4), pour déterminer le graphique de motif en fonction de l'information de représentation et pour piloter le dispositif d'affichage (9, 11) pour représenter le graphique de motif.
